# FASCICULE DE BREVET EUROPEEN

(11) **EP 1 088 613 B1**
(45) Date de publication et mention de la délivrance du brevet: **23.04.2008**
(21) Numéro de dépôt: 99810884.9
(22) Date de dépôt: 30.09.1999
(51) Int. Cl.: B23B 29/034

(54) **Tête d'usinage**
Bearbeitungskopf
Machining head

(43) Date de publication de la demande: 04.04.2001
(73) Titulaire: Kummer Frères SA, Fabrique de machines, CH-2720 Tramelan (CH)
(72) Inventeur: Leiber, Hans-Jürgen, 2720 Tramelan (CH)
(74) Mandataire: WILLIAM BLANC & CIE

(56) Documents cités:
- DE-A- 3 408 352
- US-A- 4 508 475
- US-A- 5 307 714
- US-A- 5 836 727
- PATENT ABSTRACTS OF JAPAN vol. 1995, no. 03, 28 avril 1995 (1995-04-28) & JP 06 335803 A (KURODA PRECISION IND LTD), 6 décembre 1994 (1994-12-06)

## Description

La présente invention concerne une tête d'usinage, destinée à être montée sur une poupée de machine-outil et munie d'un coulisseau porte-outil déplaçable radialement. Une telle tête d'usinage permet l'usinage de portions cylindriques externes ou internes, coaxiales, de diamètres différents, de même que de faces planes circulaires ou tronconiques, à l'aide d'un seul outil d'usinage.

Différentes têtes d'usinage aptes à effectuer un usinage de ce genre sont connues de la technique.

La maison Komet à Besigheim / Allemagne, fournit une tête d'usinage de ce type comprenant un premier coulisseau apte à être déplacé perpendiculairement à l'axe de rotation de la tête d'usinage, ce premier coulisseau portant l'outil d'usinage, ainsi qu'un deuxième coulisseau de compensation de balourd, lui aussi apte à être déplacé perpendiculairement à l'axe de rotation de la tête d'usinage. La masse du deuxième coulisseau est équivalente à la somme de celles du premier coulisseau et de l'outil qu'il porte, les deux coulisseaux sont entraînés en déplacement, selon des directions opposées, par un tirant muni d'une double crémaillère agissant simultanément sur les deux coulisseaux. Ce dispositif comprend au moins deux inconvénients majeurs, à savoir que la force nécessaire pour actionner le tirant dépend essentiellement de la force centrifuge s'exerçant sur les deux coulisseaux, soit de la vitesse de rotation de la tête ainsi que de la position radiale des deux coulisseaux. De ce fait, l'utilisation d'une telle tête d'usinage est limitée pour les faibles vitesses d'usinage. L'autre inconvénient est causé par le jeu de la crémaillère sur les dentures des coulisseaux limitant la précision d'usinage.

D'autres têtes d'usinage proposent de faire pivoter l'outil d'usinage sur un cercle excentrique. Une telle manière de faire implique que l'angle d'attaque de l'outil sur la pièce à usiner varie lors de l'usinage, ce qui est préjudiciable à l'état de surface de la pièce usinée.

Le brevet US-A-4.508.475 de Peuterbaugh décrit une tête d'usinage à deux coulisseaux, les moyens de pression s'exerçant sur les coulisseaux étant constitués par des ressorts. Ce document ne précise nulle part une relation entre les forces de pression exercées par les ressorts et celles exercées par la force centrifuge.

Le moyen de pression hydraulique décrit dans le brevet US-A-5.307.714 de Muendlein et al. agit sur l'actuateur longitudinal permettant le déplacement des coulisseaux et non directement sur les coulisseaux. On n'a donc pas une compensation de la force centrifuge sur les coulisseaux comme recherché.

Le dispositif de JP-A-06335803 décrit une tête d'usinage comportant un coulisseau déplaçable mais sans aucun moyen de commande de pression.

Un premier but de l'invention est donc de proposer une tête d'usinage apte à effectuer un usinage comme proposé, exempte des inconvénients mentionnés des têtes d'usinage connues.

Un autre but de l'invention est de proposer une tête d'usinage apte à effectuer un usinage comme proposé, dont la force d'actionnement des moyens de déplacement radial de l'outil est indépendante de la vitesse de rotation de la tête ainsi que du déplacement radial de l'outil.

Un autre but de l'invention est de proposer une tête d'usinage apte à effectuer un usinage comme proposé, dont les moyens d'actionnement de déplacement radial de l'outil sont exempts de jeu.

Un autre but de l'invention est de proposer une tête d'usinage apte à effectuer un usinage comme proposé, de construction simple, fiable et de faible entretien.

Selon l'invention ces buts sont obtenus par une tête d'usinage telle que décrite dans la revendication 1, des variantes ou autres formes d'exécution étant décrites dans les revendications dépendantes.

Une forme d'exécution de l'invention est décrite ci-dessous, cette description étant à considérer en regard du dessin annexé comportant les figures où :
la figure 1 représente une forme d'exécution préférentielle d'une tête d'usinage selon l'invention, vue en coupe selon un plan parallèle à la direction de déplacement du porte-outil ainsi qu'à l'axe de rotation de la tête d'usinage,
la figure 2 est une vue semblable à la précédente pour une autre position radiale du porte-outil, et
la figure 3 est une vue en coupe selon un plan perpendiculaire au plan de coupe des deux vues précédentes.

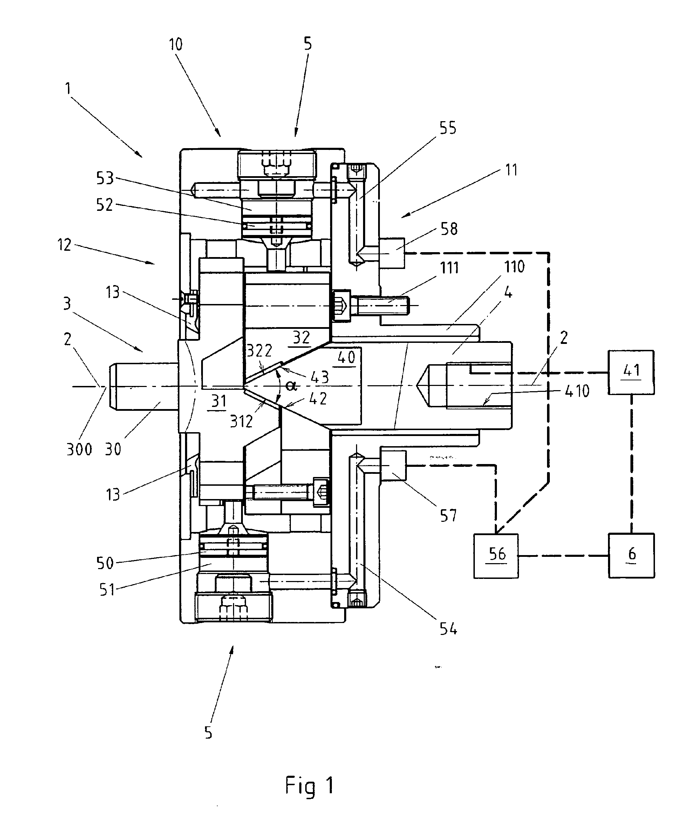

La tête d'usinage 1 de la figure 1 est essentiellement constituée d'un corps 10, de forme généralement cylindrique, composé comme on le verra de plusieurs éléments. Sur la face arrière 11 du corps 10 on a un arbre tubulaire 110, destiné être introduit dans une partie d'entraînement de la machine-outil, non représentée ici. Une pluralité de tiges filetées 111, régulièrement réparties sur un cercle de la face arrière 11, assurent la fixation du corps 10, respectivement de la tête d'usinage 1, sur la partie d'entraînement ainsi que son entraînement en rotation autour d'un axe de rotation représenté en 2. La face avant 12 du corps 10 comprend le porte-outil 3 constitué ici d'un segment d'arbre cylindrique 30 monté sur un premier coulisseau 31.

Un outil d'usinage, non représenté sur les figures, peut être monté sur le segment cylindrique 30 du porte-outil 3.

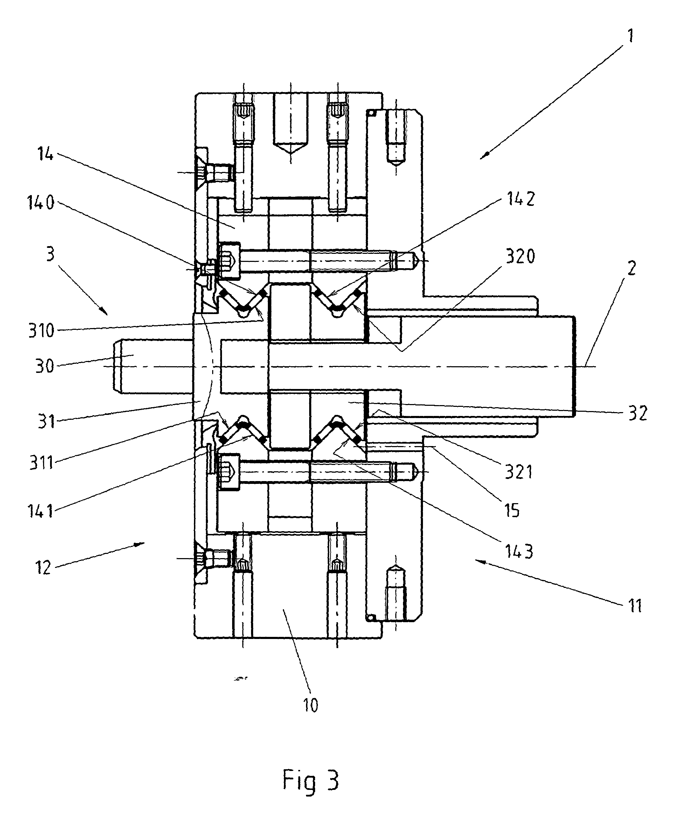

En se reportant à la figure 3, on voit que les deux faces latérales 310 et 311 du premier coulisseau 31 sont concaves, formées en V, de manière à correspondre, à des faces de glissement convexes 140 et 141 d'un élément de guidage 14 faisant partie du corps 10. Des roulements à aiguilles disposés entre les faces 310 et 140, respectivement 311 et 141 facilitent le coulissement du premier coulisseau 31 relativement au corps de guidage 14.

Un deuxième coulisseau 32, destiné à éliminer le balourd créé par le porte-outil 3, est disposé ici en regard de la face du premier coulisseau 31 opposée à la face munie du segment cylindrique 30. Comme le précédent, et comme représenté à la figure 3, le deuxième coulisseau 32 comprend deux faces latérales 320 et 321 guidées comme précédemment, via des roulements à aiguilles, par des faces de glissement 142 et 143 de l'élément de guidage 14.

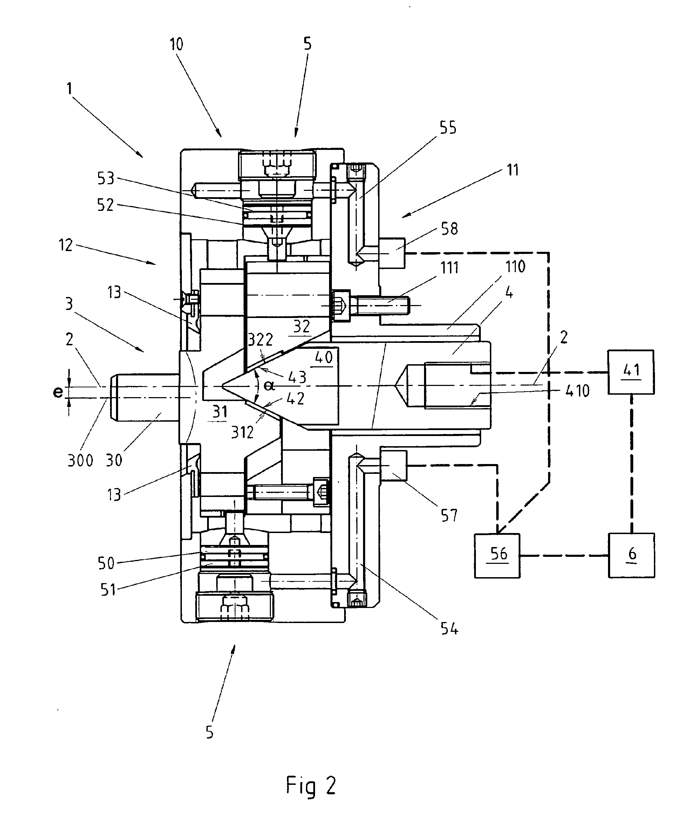

En revenant à la figure 1, on voit que la portion arrière du premier coulisseau 31 ainsi que la portion arrière du deuxième coulisseau 32 comprennent chacune une surface plane d'appui oblique 312, respectivement 322, en appui sur une pointe en V 40 d'un actionneur 4 à déplacement axial. L'actionneur 4 est ici disposé coaxialement à l'axe de rotation 2 de la tête d'usinage, à l'intérieur de la partie évidée de l'arbre tubulaire 110 ; il est apte à prendre n'importe quelle position entre une position rétractée, comme visible à la figure 1 et une position avancée, comme visible à la figure 2. Des moyens d'actionnement, comme par exemple l'axe numérique schématisé en 41, sont reliés à cet effet à l'actionneur 4, par exemple au moyen du taraudage 410.

Ainsi, en position rétractée, comme sur la figure 1, les deux surfaces d'appui obliques 312 et 322 des deux coulisseaux 31 et 32 sont pressées, par des moyens qui seront décrits plus bas, contre les faces planes oblique correspondantes 42 et 43 de la pointe en V 40 de l'actionneur 4. Lorsqu'on fait se déplacer l'actionneur 4 afin qu'il prenne une position axiale quelconque entre la position représentée à la figure 1 et celle représentée à la figure 2, on voit que les faces 42 et 43 repoussent selon deux directions opposées les deux coulisseaux 31 et 32 par l'intermédiaire de leurs surfaces d'appui 312 et 322. Ainsi, selon la position axiale de l'actionneur 4, l'outil porté par le segment cylindrique 30 du porte-outil 3 est décalé radialement relativement à l'axe de rotation 2 de la broche, l'axe de l'arbre 30 étant représenté en 300, le décalage prenant la valeur « e » comme sur la figure 2.

Lorsqu'on varie le décalage radial du porte-outil 3, l'outil monté sur l'arbre 30 est décalé de la même valeur, faisant qu'il usine la pièce selon un diamètre ayant varié du double de cette valeur. Ainsi, avec un seul outil monté sur l'arbre 30, il est possible d'usiner une pièce selon une pluralité de diamètres différents, tous coaxiaux, de même que des faces planes circulaires ou annulaires ainsi que des portions tronconiques.

De manière préférentielle, les angles que font les plans obliques 42 et 43, respectivement 312 et 322 sont égaux, faisant que le déplacement radial du deuxième coulisseau 32 est égal mais de sens opposé au déplacement radial du premier coulisseau 31. En dimensionnant le deuxième coulisseau 32 de manière à ce que sa masse corresponde à la masse du premier coulisseau 31 et de l'outil qu'il porte et que les centre de gravité des deux coulisseaux soient exactement opposés, on obtient une élimination du balourd du corps 10 en rotation autour de l'axe 2.

De préférence l'angle α séparant les deux plans obliques 42 et 43 est déterminé de telle manière que la tangente de la moitié de cet angle vaille 0.5, c'est-à-dire que l'angle α vaut 53.13 °. Ainsi on peut démontrer que pour un déplacement axial d'une valeur déterminée de l'actionneur 4, on a un déplacement radial du coulisseau 31, respectivement du coulisseau 32, d'une valeur correspondant à la moitié de la valeur du déplacement axial de l'actionneur 4. Ainsi, pour un déplacement axial déterminé de l'actionneur 4 on a une variation de même valeur du diamètre d'usinage.

Lors de la rotation de la tête d'usinage 1 autour de l'axe 2, la force centrifuge a tendance à écarter radialement les deux coulisseaux 31 et 32. Afin de pallier à cet effet, on prévoit des moyens de pression 5, constitués d'un premier piston 50, disposé dans une première chambre de piston 51 aménagée dans une portion du corps 10 et d'un deuxième piston 52, disposé dans une deuxième chambre de piston 53, aménagée sur une portion opposée du corps 10. Le premier piston 50 est relié ici à l'extrémité du coulisseau 31 la plus éloignée de l'axe 2 alors que le deuxième piston 52 est relié à l'extrémité correspondante du coulisseau 32. Des tubulures 54 et 55 mettent en relation chacune des chambres 51 et 53 avec un orifice d'admission disposé par exemple sur la face arrière 11 du corps 10. Des moyens de mise en pression, hydraulique ou pneumatique, schématisés en 56, injectent par l'intermédiaires de chambres de distribution rotatives de technique connue 57 et 58, une pression hydraulique ou pneumatique dans chacune des tubulures 54 et 55, respectivement dans chacune des chambres 51 et 53. Ces deux pressions tendent donc à s'opposer à la force centrifuge s'exerçant aussi bien sur le coulisseau 31 que sur le coulisseau 32.

Une unité de commande 6 commande la valeur de la pression hydraulique ou pneumatique introduite dans les chambres 51 et 53. De préférence, la force exercée par cette pression sur les pistons 50 et 52 est supérieure à la force centrifuge appliquée aux deux coulisseaux 31 et 32, de manière à continuellement plaquer les surfaces d'appui 312 et 322 des coulisseaux 31 et 32 sur les faces 42 et 43 de l'actionneur 4. Les moyens de commande 6 sont aptes à commander cette pression de manière à ce que la force résultante correspondant à la différence entre la force exercée par cette pression sur le piston 50 ou 52 et la force centrifuge exercée sur le coulisseau 31 ou 32 soit une constante. Ainsi, quelle que soit la position axiale de l'actionneur 4, la pointe 40 est soumise à deux forces opposées, chacune correspondant à la force résultante constante mentionnée précédemment.

On sait que la force centrifuge est fonction : A- de la masse des éléments en mouvement, soit de celle du porte-outil 3 comprenant le coulisseau 31 et la portion d'arbre 30, à laquelle s'ajoute celle de l'outil, correspondant comme on l'a vu plus haut à la masse du coulisseau 32, B- du carré de la vitesse de rotation ainsi que C- du décentrage des éléments en mouvement. Les masses étant connues, l'unité de commande 6 devra donc commander les moyens de mise en pression 56, de manière à ce que la pression hydraulique ou pneumatique introduite dans les chambres 51 et 53 tienne compte du décentrage ainsi que de la vitesse de rotation de la tête d'usinage, ces deux valeurs étant fournies par la commande numérique ou autre commande de la machine-outil. Le décentrage est donné par exemple par l'axe numérique 41.

La pointe 40 de l'actionneur 4 reçoit, de la part de chaque coulisseau 31 et 32 une force correspondant à la force résultante constante décrite précédemment et s'exerçant sur chacun des plans obliques 42 et 43. On peut démontrer que la décomposition de chacune de ces forces produit notamment une composante s'exerçant axialement sur l'actionneur 4. Par l'angle α de 53,13° mentionné plus haut séparant les deux plans obliques 42 et 43, on a que la somme des composantes axiales dues aux deux forces résultantes s'exerçant radialement correspond a une valeur de l'une des forces résultantes. Vu que comme on l'a décrit plus haut, les moyens de commande de mise en pression des chambres 51 et 53 sont aptes à faire que ces forces résultantes sont égales et constantes, on a donc finalement une force axiale s'exerçant sur l'actionneur 4 qui est constante, indépendamment de la vitesse de rotation de la tête d'usinage ainsi que du décentrage de l'outil d'usinage.

De préférence on dimensionne les moyens de mise en pression de manière à ce que cette force axiale s'exerçant sur l'actionneur 4 soit suffisante pour assurer un bon contact entre les faces obliques 42 et 43 et les surfaces d'appui 312 et 322 mais néanmoins pas trop importante afin de ne pas nécessiter un axe numérique 41 de trop forte puissance et éviter une usure prématurée des surfaces 42,43 ainsi que 312 et 322 en contact glissant

De préférence les surfaces 42 et 43, de même que les surfaces 312 et 322 sont traitées ou munies de moyens anti-usure et/ou sont autolubrifiantes.

La figure 3 montre en outre un orifice et une canalisation d'introduction d'air sous pression 15 débouchant sur une portion creuse de l'intérieur de la tête d'usinage 1. Par un joint tournant, non représenté, on introduit de l'air avec une légère surpression, par exemple 0.5 bar, à l'intérieur de ladite portion creuse de l'intérieur de la tête d'usinage. Cet air s'échappe par un joint 13 disposé sur la face avant 12 du corps 10, entourant la portion mobile du dispositif visible depuis cette face, soit une portion du premier coulisseau 31 ainsi que l'arbre porte-outil 30. De cette manière, on évite l'introduction de projections d'huile ou de copeaux à l'intérieur de la tête d'usinage qui seraient susceptibles d'endommager le dispositif ou de perturber son bon fonctionnement.

La description et les figures qui précèdent décrivent une forme d'exécution préférentielle d'une tête d'usinage excentrique. Diverses variantes peuvent être envisagées par l'homme du métier, notamment l'angle α entre les plans obliques 42 et 43 décrit plus haut comme étant de 53.13°, peut avoir en fait n'importe quelle valeur selon les besoins. En particulier, une autre valeur préférentielle pourrait être que l'angle α vaille 90°. Un déplacement axial donné de l'actionneur 4 causerait un déplacement radial de même valeur de l'outil, correspondant à une variation de cette valeur du rayon d'usinage. Dans ce cas, la force axiale serait égale au double d'une force radiale exercée par un coulisseau.

## Revendications

1. Tête d'usinage (1) comportant:
un porte-outil (3) comprenant un premier coulisseau (31) apte à être déplacé selon les deux sens opposés d'une première direction perpendiculaire à un axe de rotation (2) de la tête d'usinage,
un deuxième coulisseau (32) apte à être déplacé selon les deux sens opposés d'une deuxième direction, parallèle à ladite première direction,
un moyen de commande de déplacement (4) des deux dits coulisseaux apte à déplacer les deux dits coulisseaux chacun selon un sens opposé au sens de déplacement de l'autre coulisseau, ledit moyen de commande en déplacement étant actionné en déplacement selon les deux sens opposés d'une direction parallèle à l'axe de rotation (2) de la tête d'usinage,
**caractérisée en ce qu'**elle comprend en outre
un moyen de commande (6) d'une pression, et **en ce que**
chacun desdits coulisseaux (31,32) comprend un moyen de pression (5) apte à exercer sur ledit coulisseau une force supérieure à la force centrifuge s'exerçant sur le coulisseau et dirigée en sens opposé à celui de la force centrifuge,
ledit moyen de commande de pression (6) étant apte à imposer audit moyen de pression (5) ladite force supérieure à la force centrifuge, telle que la différence entre ladite force supérieure et la force centrifuge est constante pour toute position desdits coulisseaux.

2. Tête d'usinage selon la revendication 1, **caractérisée en ce que** le moyen de commande en déplacement (4) des deux coulisseaux (31,32) comprend une première face plane (42) disposée dans un premier plan d'appui perpendiculaire à un plan contenant l'axe de rotation (2) de la tête d'usinage ainsi que la direction de déplacement du premier coulisseau (31), ledit premier plan d'appui étant incliné relativement audit axe de rotation ainsi qu'à ladite direction de déplacement, ladite première face plane (42) étant continuellement en contact avec une surface d'appui (312) du premier coulisseau (31), ladite surface d'appui (312) étant parallèle audit premier plan d'appui, ainsi qu'une deuxième face plane (43) disposée dans un deuxième plan d'appui perpendiculaire à un plan contenant l'axe de rotation (2) de la tête d'usinage ainsi que la direction de déplacement du deuxième coulisseau (32), ledit deuxième plan d'appui étant incliné relativement audit axe de rotation ainsi qu'à ladite direction de déplacement, ladite deuxième face plane (43) étant continuellement en contact avec une surface d'appui (322) du deuxième coulisseau (32), ladite surface d'appui (322) étant parallèle audit deuxième plan d'appui, les deux faces planes (42,43) du moyen de commande en déplacement (4) formant un angle (α) entre elles.

3. Tête d'usinage selon la revendication 2, **caractérisé en ce que** l'angle (∝) formé par les deux faces planes (42,33) du moyen de commande en déplacement (4) est symétrique relativement à l'axe de rotation (2) de la tête d'usinage.

4. Tête d'usinage selon la revendication 3, **caractérisée en ce que** la tangente de la moitié de l'angle (∝) formé par les deux faces planes (42,33) du moyen de commande en déplacement (4) vaut 0.5.

5. Tête d'usinage selon l'une des revendications précédentes, **caractérisée en ce que** le moyen de pression (5) agissant sur le premier coulisseau (31) permet d'assurer que la surface d'appui (312) dudit premier coulisseau (31) est continuellement en contact avec ladite première face plane (42) du moyen de commande en déplacement (4) et **en ce que** le moyen de pression (5) agissant sur le deuxième coulisseau (32) permet d'assurer que la surface d'appui (322) dudit deuxième coulisseau est continuellement en contact avec ladite deuxième face plane (43) du moyen de commande en déplacement (4), indépendamment de la vitesse de rotation de la tête de broche ainsi que des valeurs et des sens de déplacement des deux coulisseaux.

6. Tête d'usinage selon l'une des revendications précédentes, **caractérisée en ce que** la force résultante, correspondant à la différence entre la force exercée par le moyen de pression (5) sur le coulisseau correspondant (31,32) et la force centrifuge exercée sur ledit coulisseau est constante, indépendamment de la vitesse de rotation de la tête de broche ainsi que des valeurs et des sens de déplacement des deux coulisses.

7. Tête d'usinage selon l'une des revendications précédentes, **caractérisée en ce que** ledit moyen de pression comprend un piston (50,52) mobile radialement dans une chambre de pression (51,53) et relié à un coulisseau (31,32), ainsi qu'un moyen de mise en pression (56) apte à introduire un fluide sous une pression déterminée dans chacune desdites chambres de pression.

8. Tête d'usinage selon la revendication 7, **caractérisée en ce que** ladite pression déterminé est égale dans les deux chambres de pression (51,53).

9. Tête d'usinage selon l'une des revendications 7 ou 8, **caractérisée en ce que** la valeur de ladite pression est déterminée par une unité de commande (6) et est calculée en tenant notamment compte des paramètres : vitesse de rotation de la tête d'usinage et décentrage du porte-outil (3).

10. Tête d'usinage selon l'une des revendications précédentes, **caractérisée en ce qu'**elle comprend en outre un moyen (15) de mise en surpression pneumatique d'une portion interne de ladite tête d'usinage, ainsi qu'un joint (13) appliqué entre le premier coulisseau (31) déplaçable radialement et la portion de la face avant (12) de la tête d'usinage non déplaçable radialement.

## Claims

1. A machining head (1) including:
a tool holder (3) comprising a first slide (31) capable of being displaced along two opposite directions of a first direction perpendicular to an axis of rotation (2) of the machining head,
a second slide (32) capable of being displaced along the two opposite directions of a second direction, parallel to said first direction,
means (4) for controlling the displacement of said two slides, capable of displacing said two slides each along an opposite direction to the direction of displacement of the other slide, said displacement control means being actuated in displacement along both opposite directions of a direction parallel to the axis of rotation (2) of the machining head,
**characterized in that** it further comprises
means (6) for controlling a pressure, and **in that**
each of said slides (31, 32) comprises a pressure means (5) capable of exerting on said slide a force larger than the centrifugal force being exerted on the slide and directed in the opposite direction to that of the centrifugal force,
said pressure control means (6) being capable of imposing to said pressure means (5) said larger force than the centrifugal force, so that the difference between said larger force and the centrifugal force is constant for any position of said slides.

2. The machining head according to claim 1, **characterized in that** the means (4) for controlling displacement of both slides (31, 32) comprises a first planar face (42) positioned in a first supporting plane perpendicular to a plane containing the axis of rotation (2) of the machining head as well as the displacement direction of the first slide (31), said first supporting plane being tilted relatively to said axis of rotation as well as to said displacement direction, said first planar face (42) being constantly in contact with a supporting surface (312) of the first slide (31), said supporting surface (312) being parallel to said first supporting plane, as well as a second planar face (43) positioned in a second supporting plane perpendicular to a plane containing the axis of rotation (2) of the machining head as well as the displacement direction of the second slide (32), said second supporting plane being tilted relatively to said axis of rotation as well as to said displacement direction, said second planar face (43) being constantly in contact with a supporting surface (322) of the second slide (32), said supporting surface (322) being parallel to said second supporting plane, both planar faces (42, 43) of the displacement control means (4) forming an angle (α) between them.

3. The machining head according to claim 2, **characterized in that** the angle (α) formed by both planar faces (42, 43) of the displacement control means (4) is symmetrical relatively to the axis of rotation (2) of the machining head.

4. The machining head according to claim 3, **characterized in that** the tangent of the half of the angle (α) formed by both planar faces (42, 43) of the displacement control means (4) has a value of 0.5.

5. The machining head according to any of the preceding claims, **characterized in that**, with the pressure means (5) acting on the first slide (31), it is possible to ensure that the supporting surface (312) of said first slide (31) is constantly in contact with said first planar face (42) of the displacement control means (4) and **in that** with the pressure means (5) acting on the second slide (32), it is possible to ensure that the supporting surface (322) of said second slide is constantly in contact with said second planar face (43) of the displacement control means (4), independently of the speed of rotation of the spindle head as well as of the displacement values and directions of both slides.

6. The machining head according to any of the preceding claims, **characterized in that** the resulting force, corresponding to the difference between the force exerted by the pressure means (5) on the corresponding slide (31, 32) and the centrifugal force exerted on said slide is constant, independently of the speed of rotation of the spindle head as well as of the displacement values and directions of both slides.

7. The machining head according to any of the preceding claims, **characterized in that** said pressure means comprises a piston (50, 52) radially mobile in a pressure chamber (51, 53) and connected to a slide (31, 32), as well as a pressurizing means (56) capable of introducing a fluid under a determined pressure in each of said pressure chambers.

8. The machining head according to claim 7, **characterized in that** said determined pressure is equal in both pressure chambers (51, 53).

9. The machining head according to any of claims 7 or 8, **characterized in that** the value of said pressure is determined by a control unit (6) and is computed by notably taking parameters into account: speed of rotation of the machining head and misalignment of the tool holder (3).

10. The machining head according to any of the preceding claims, **characterized in that** it further comprises a pneumatic means (15) for overpressurizing an internal portion of said machining head, as well as a gasket (13) applied between the first radially displaceable slide (31) and the portion of the front face (12) of the radially non-displaceable machining head.

## Patentansprüche

1. Bearbeitungskopf (1), umfassend:
einen Werkzeughalter (3), der eine erste Gleitführung (31) umfasst, die in den beiden Richtungen verschiebbar ist, die einer ersten Richtung entgegengesetzt sind, die zu einer Drehachse (2) des Bearbeitungskopfes rechtwinklig ist,
eine zweite Gleitführung (32), die in den beiden Richtungen verschiebbar ist, die einer zweiten Richtung entgegengesetzt sind, die parallel zur ersten Richtung ist,
ein Verschiebungssteuermittel (4) der beiden Gleitführungen, das dazu geeignet ist, die beiden Gleitführungen jeweils in einer Richtung zu bewegen, die der Verschiebungsrichtung der anderen Gleitführung entgegengesetzt ist, wobei das Verschiebungssteuermittel verschiebbar in den beiden Richtungen betätigt wird, die einer Richtung entgegengesetzt sind, die zur Drehachse (2) des Bearbeitungskopfes parallel ist,
**dadurch gekennzeichnet, dass** er ferner folgendes umfasst
ein Mittel zum Steuern (6) eines Drucks, und dass
jede der Gleitführungen (31, 32) ein Druckmittel (5) umfasst, das dazu geeignet ist, auf die Gleitführung eine Kraft auszuüben, die größer ist als die Zentrifugalkraft, die auf die Gleitführung ausgeübt wird und in die Richtung geht, die derjenigen der Zentrifugalkraft entgegengesetzt ist,
wobei das Drucksteuermittel (6) dazu geeignet ist, dem Druckmittel (5) die Kraft aufzuerlegen, die größer ist als die Zentrifugalkraft, so dass der Unterschied zwischen der größeren Kraft und der Zentrifugalkraft für die alle Positionen der Gleitführungen konstant ist.

2. Bearbeitungskopf nach Anspruch 1, **dadurch gekennzeichnet, dass** das Verschiebungssteuermittel (4) der beiden Gleitführungen (31, 32) eine erste ebene Seite (42), die in einer ersten Stützebene angeordnet ist, die zu einer Ebene rechtwinklig ist, welche die Drehachse (2) des Bearbeitungskopfes und die Verschiebungsrichtung der ersten Gleitführung (31) enthält, wobei die erste Stützebene relativ zur Drehachse sowie zur Verschiebungsrichtung geneigt ist,
wobei die erste ebene Seite (42) ununterbrochen mit einer Stützfläche (312) der ersten Gleitführung (31) in Kontakt steht, wobei die Stützfläche (312) zur ersten Stützebene parallel ist, sowie eine zweite ebene Seite (43), die in einer zweiten Stützebene rechtwinklig zu einer Ebene angeordnet ist, welche die Drehachse (2) des Bearbeitungskopfes sowie die Verschiebungsrichtung der zweiten Gleitführung (32) enthält,
wobei die zweite Stützebene relativ zur Drehachse sowie zur Verschiebungsrichtung geneigt ist, wobei die zweite ebene Seite (43) ununterbrochen mit einer Stützfläche (322) der zweiten Gleitführung (32) in Kontakt steht, wobei die Stützfläche (322) parallel zur zweiten Stützebene liegt, wobei die beiden ebenen Seiten (42, 43) des Verschiebungssteuermittels (4) untereinander einen Winkel (α) bilden, umfasst.

3. Bearbeitungskopf nach Anspruch 2, **dadurch gekennzeichnet, dass** der Winkel (α), der von den beiden ebenen Seiten (42, 33) des Verschiebungssteuermittels (4) gebildet wird, im Verhältnis zur Drehachse (2) des Bearbeitungskopfes symmetrisch ist.

4. Bearbeitungskopf nach Anspruch 3, **dadurch gekennzeichnet, dass** die Berührungslinie der Mitte des Winkels (α), der von den beiden ebenen Seiten (42, 33) des Verschiebungssteuermittels (4) gebildet wird, 0,5 beträgt.

5. Bearbeitungskopf nach einem der vorhergehenden Ansprüche, **dadurch gekennzeichnet, dass** das Druckmittel (5), das auf die erste Gleitführung (31) einwirkt, sicherstellen kann, dass die Stützfläche (312) der ersten Gleitführung (31) ununterbrochen in Kontakt mit der ersten ebenen Seite (42) des Verschiebungssteuermittels (4) steht, und dass das Druckmittel (5), das auf die zweite Gleitführung (32) einwirkt, sicherstellen kann, dass die Stützfläche (322) der zweiten Gleitführung ununterbrochen in Kontakt mit der zweiten ebenen Seite (43) des Verschiebungssteuermittels (4) steht, und zwar unabhängig von der Drehgeschwindigkeit des Spindelendes sowie von den Verschiebungswerten und -richtungen der beiden Gleitführungen.

6. Bearbeitungskopf nach einem der vorhergehenden Ansprüche, **dadurch gekennzeichnet, dass** die sich ergebende Kraft, die dem Unterschied zwischen der Kraft, die von dem Druckmittel (5) auf die entsprechende Gleitführung (31, 32) ausgeübt wird, und der Zentrifugalkraft, die auf die Gleitführung ausgeübt wird, konstant ist, und zwar unabhängig von der Drehgeschwindigkeit des Spindelendes sowie von den Verschiebungswerten und -richtungen der beiden Gleitführungen.

7. Bearbeitungskopf nach einem der vorhergehenden Ansprüche, **dadurch gekennzeichnet, dass** das Druckmittel einen Kolben (50, 52) umfasst, der radial in einer Druckkammer (51, 53) beweglich ist und mit einer Gleitführung (31, 32) verbunden ist, sowie ein Druckbeaufschlagungsmittel (56), das dazu geeignet ist, ein Fluid unter einem vorherbestimmten Druck in jede der Druckkammern einzuführen.

8. Bearbeitungskopf nach Anspruch 7, **dadurch gekennzeichnet, dass** der bestimmte Druck in den beiden Druckkammern (51, 53) gleich ist.

9. Bearbeitungskopf nach einem der Ansprüche 7 oder 8, **dadurch gekennzeichnet, dass** der Wert des Drucks durch eine Steuereinheit (6) bestimmt wird und unter Berücksichtigung insbesondere der folgenden Parameter berechnet wird: Drehgeschwindigkeit des Bearbeitungskopfes und Dezentrierung des Werkzeughalters (3).

10. Bearbeitungskopf nach einem der vorhergehenden Ansprüche, **dadurch gekennzeichnet, dass** er außerdem ein Mittel (15) zur pneumatischen Überdruckbeaufschlagung eines Innenabschnitts des Bearbeitungskopfes sowie eine Dichtung (13), die zwischen der ersten radial verschiebbaren Gleitführung (31) und dem Abschnitt der nicht radial verschiebbaren Vorderseite (12) des Bearbeitungskopfes angebracht wird, umfasst.
